# EUROPÄISCHE PATENTSCHRIFT

(11) **EP 2 976 389 B1**
(45) Veröffentlichungstag und Bekanntmachung des Hinweises auf die Patenterteilung: **16.05.2018**
(21) Anmeldenummer: 14712267.5
(22) Anmeldetag: 20.03.2014
(51) Int. Cl.: C08L 75/04, C08F 2/18, C08J 9/16, C08F 283/00

(54) **POLYURETHAN BASIERTE POLYMERZUSAMMENSETZUNG**
POLYURETHANE-BASED POLYMER COMPOSITION
COMPOSITION POLYMÈRE À BASE DE POLYURÉTHANE

(30) Priorität: 20.03.2013 EP 13160144
(43) Veröffentlichungstag der Anmeldung: 27.01.2016
(73) Patentinhaber: BASF SE, 67056 Ludwigshafen am Rhein (DE)
(72) Erfinder: SPIES, Patrick, 67433 Neustadt (DE); BRAUN, Frank, 67063 Ludwigshafen (DE); PRISSOK, Frank, 49448 Lemförde (DE)
(74) Vertreter: BASF IP Association
(86) Internationale Anmeldenummer: PCT/EP2014/055635
(87) Internationale Veröffentlichungsnummer: WO 2014/147194

(56) Entgegenhaltungen:
- EP-A1- 2 682 427
- WO-A1-2010/010010
- DE-A1- 2 003 365
- DE-A1- 2 348 153
- JP-A- 2007 231 068

## Beschreibung

Die Erfindung betrifft eine Polymerzusammensetzung, insbesondere für Spritzgussanwendungen, auf Basis von thermoplastischen Polyurethanen (TPU) ein Verfahren zu deren Herstellung, Formkörper erhältlich aus der Polymerzusammensetzung, sowie deren Verwendung im Automobilbau, der Schuhherstellung, für Sport und Freizeitanwendungen, in der Landwirtschaft und der Fischerei.

Thermoplastische Polyurethane für Spritzgussanwendungen sind bekannt. Sie können auf üblichen Spritzgieß-, Extrusions- und Blasformanlagen verarbeitet werden und zeichnen sich beispielsweise durch hervorragende Elastizität, Transparenz, Abriebsfestigkeit und Chemikalienbeständigkeit aus. TPU finden daher Anwendungen im Automobilbau, der Schuhherstellung, für Sport und Freizeitanwendungen, in der Landwirtschaft und der Fischerei.

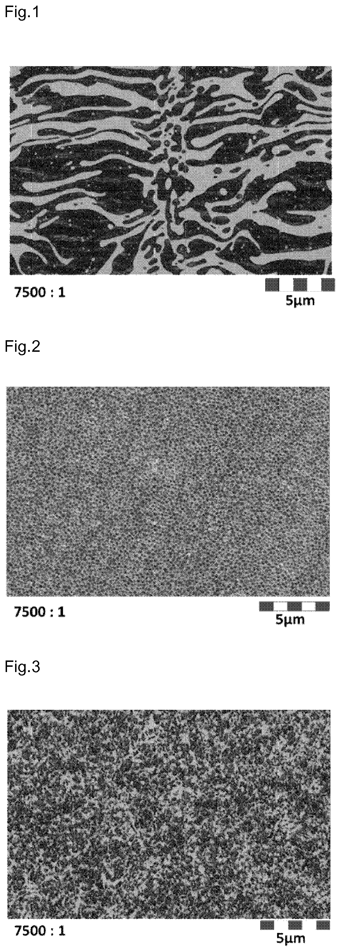

Für manche Anwendungen ist eine Mischung von TPU mit anderen Polymeren, wie Polystyrol, wünschenswert, beispielsweise um das TPU zu mattieren, die Oberflächeneigenschaften für spezielle Anwendungen zu verbessern oder das Material zu versteifen. Allerdings ist TPU nur begrenzt mit Polystyrol und anderen radikalisch polymerisierten Polymeren mischbar. Wird TPU mit mehr als 15 Gew.-% kompoundiert, so kommt es im Spritzguss zu einer Delamination und damit zu einer drastischen Verschlechterung der Eigenschaften. Die Delamination kann im Rasterelektronenmikroskop sichtbar gemacht werden. In Figur 1 ist eine REM Aufnahme eines Kompounds aus 60 Gew.-% Polystyrol und 40 Gew.-% TPU (Elastollan® 1170A) gezeigt. Das Polystyrol erscheint in der Aufnahme dunkel (Kontrastierung mit RuO₄)

Wünschenswert war es daher, Verfahren zu finden durch die TPU-Zusammensetzungen mit einem höheren Polystyrolanteil erhalten werden können.

In der WO 2010/010010 sind thermoplastische Polymerblends auf der Basis von thermoplastischem Polyurethan und Styrolpolymerisat, daraus hergestellte Schaumstoffe und zugehörige Herstellungsverfahren beschrieben.

In der JP-A 1980-080440 ist ein Verfahren zur Herstellung einer Polymerzusammensetzung beschrieben, wobei 20 bis 80 Gew.-% TPU Elastomerpartikel und 80 bis 20 Gew.-% eines Styrolmonomers oder Methacrylatesters in einem wässrigen Medium suspendiert und polymerisiert werden.

Die JP-A 2007-231068 offenbart expandierbare styrolmodifizierte TPU Partikel, enthaltend 100 Gewichtsteile TPU und 20 bis 300 Gewichtsteile eines Styrolpolymers, wobei Styrolpolymerpartikel einer Größe von 0,5 µm oder weniger in dem TPU dispergiert sind.

Obwohl mit den bekannten Materialien bereits gute Ergebnisse erzielt werden, bleibt doch ein breiter Raum für Verbesserungen, beispielsweise was die Elastizität und Transparenz solcher Materialien angeht.

Aufgabe war es daher, Materialien auf Basis von TPU zu entwickeln, welche insbesondere bei hohen Polystyrolanteilen noch eine dem TPU vergleichbare Elastizität und Transparenz besitzen.

Es wurde gefunden, dass sich Polymere aus TPU und einem durch radikalische Polymerisation erhältlichen Polymer mit den gewünschten vorteilhaften Eigenschaften herstellen lassen, wenn das eingesetzte TPU einen Vicat-Erweichungspunkt von weniger als 80°C (nach ISO 306/A50) aufweist und das durch radikalische Polymerisation erhältliche Polymer als Kamm-, Pfropf oder Copolymer an das TPU gebunden ist.

Gegenstand der Erfindung ist daher eine Polymerzusammensetzung, insbesondere für Spritzgussanwendungen, enthaltend mindestens ein thermoplastisches Polyurethan (TPU) mit einer Vicat-Temperatur, gemessen nach ISO 306/A50, von unter 80°C und 5 bis 95 Gew.-% mindestens eines durch radikalische Polymerisation erhältlichen Polymers, bezogen auf die Summe von TPU und dem durch radikalische Polymerisation erhältlichen Polymer, wobei das durch radikalische Polymerisation erhältliche Polymer als Kamm-, Pfropf- oder Copolymer an das TPU gebunden ist und wobei das TPU funktionelle Gruppen enthält, welche unter den typischen Bedingungen einer radikalischen Polymerisation ein Kamm-, Pfropf- der Copolymer mit den radikalisch polymerisierbaren Monomeren des durch radikalische Polymerisation erhältlichen Polymers ausbilden,
wobei expandierbare Polymerpartikel, enthaltend mindestens ein thermoplastisches Polyurethan (TPU) mit einer Vicat-Temperatur (nach ISO 306/ASO) von unter 80°C und 5 bis 95 Gew.-%, mindestens eines durch radikalische Polymerisation erhältlichen Polymers, bezogen auf die Summe von TPU und dem durch radikalische Polymerisation erhältlichen Polymer, wobei das Styrolpolymer als Kamm-, Pfropf- oder Copolymer an das TPU gebunden ist, wie sie in der älteren, nicht vorveröffentlichten EP 2 682 427 vorgeschlagen werden, ausgenommen sind.

Ebenso Gegenstand der Erfindung ist ein Formteil, erhältlich durch Spritzguss einer erfindungsgemäßen Polymerzusammensetzung sowie dessen Verwendung als Kabelisolation sowie Material für die Herstellung von Schleppkabeln, Pneumatikschläuchen, Spiralschläuchen, Zahnriemen, Förderschläuchen und Hydraulikschläuchen (Oberdecken).

Weiterhin Gegenstand der Erfindung ist ein Verfahren zur Herstellung der erfindungsgemäßen Polymerzusammensetzung umfassend die Schritte:
a) Dispergieren eines oder mehrerer TPU mit einer Vicat-Temperatur von weniger als 80°C, 5 bis 95 Gew.-% eines oder mehrerer radikalisch polymerisierbare Monomere und gegebenenfalls Comonomere, bezogen auf die Summe aus TPU und den genannten Monomeren, eines Polymerisationsinitiators, eines Dispergiermittels und gegebenenfalls weiterer Zusatzstoffe und/oder Polymerisationshilfsstoffe in einem wässrigen Medium bei einer Temperatur, bei der keine substantielle Polymerisation der radikalisch polymerisierbaren Monomere erfolgt, wobei das TPU funktionelle Gruppen enthält, welche unter den typischen Bedingungen einer radikalischen Polymerisation ein Kamm-, Pfropf- oder Copolymer mit den radikalisch polymerisierbaren Monomeren ausbilden;
b) gegebenenfalls Rühren der erhaltenen Dispersion für eine bis 24 h bei einer Temperatur, bei der keine substantielle Polymerisation der radikalische polymerisierbaren Monomere stattfindet, und
c) Polymerisation der radikalisch polymerisierbaren Monomere in Form eines Kamm-, Pfropf- oder Copolymers an das TPU.

Ebenso Gegenstand der Erfindung ist ein Verfahren zur Herstellung einer Polymerzusammensetzung, insbesondere für Spritzgussanwendungen, umfassend die Schritte
a) Lösen eines oder mehrerer TPU mit einer Vicat-Temperatur von weniger als 80°C und gegebenenfalls weiterer Zusatzstoffe und/oder Polymerisationshilfsstoffe in einem für TPU geeignetem Lösungsmittel, bevorzugt THF oder Dioxan;
b) Erhitzen der Lösung auf eine Temperatur, bei welcher die Polymerisation der in Schritt c) zugeführten Monomere stattfindet,
c) Zufuhr von 5 bis 95 Gew.-% eines oder mehrerer radikalisch polymerisierbarer Monomere (bezogen auf die Summe aus TPU und dem oder den radikalisch polymerisierbaren Monomeren) sowie von einem oder mehreren Polymerisationsinitiatoren.

Thermoplastische Polyurethane (TPU) und Verfahren zu deren Herstellung sind bekannt.

Erfindungsgemäß werden TPU-Typen mit einer Vicat-Temperatur von weniger als 80°C, bevorzugt von 60 bis 79°C, besonders bevorzugt von 60 bis 75°C eingesetzt. Die Vicat-Temperatur bezieht sich - wie für den Fachmann ersichtlich ist - auf das TPU, nicht auf die Kombination aus TPU und Polymer.

Die Vicat-Temperatur wird dabei nach DIN EN ISO 306 gemäß Verfahren A50, d.h. mit einer Kraft von 10 N und einer Heizrate von 50°C/h bestimmt.

Eine erfindungsgemäße Vicat-Temperatur kann nach dem Fachmann bekannten Methoden, beispielsweise durch Verwendung entsprechender Monomerbausteine, bei der Herstellung des TPU (siehe unten) erzielt werden.

Erfindungsgemäß eingesetzte TPU Typen haben bevorzugt eine Shore Härte A im Bereich von 50 bis 100, besonders bevorzugt von 65 bis 85 (gemessen nach DIN 53505).

Der Schmelzbereich (Glasübergang) liegt bevorzugt im Bereich von -20°C bis -60°C. Sie wird bevorzugt mittels dynamischer Differenzkalorimetrie (DSC) gemessen, insbesondere mit einer Heizrate von 10 °C/min., beispielsweise nach ISO 11357/-1/-2.

Bevorzugt liegt die Reißdehnung nach DIN 53504-S2 > 550 %.

Als weiteres erfindungswesentliches Merkmal neben der angegebenen Vicat-Temperatur müssen erfindungsgemäß eingesetzte TPU funktionelle Gruppen enthalten, welche unter den typischen Bedingungen einer radikalischen Polymerisation von beispielsweise Styrol (T= 100-140°C; 0.1-3 Gew.-% Peroxidinitiator wie Dicumylperoxid) ein Kamm-, Pfropf- oder Copolymer mit den radikalisch polymerisierbaren Monomeren ausbilden. Dies wird in einer ersten Variante durch Verwendung einer Di- bzw. Monoisocyanatkomponente mit radikalisch abstrahierbaren Wasserstoffatomen wie 4,4'-, 2,4'- und/oder 2,2'-Diphenylmethan-diisocyanat (MDI) sowie deren Gemische, bei der Herstellung der TPU nach grundsätzlich bekannter Weise (siehe unten) erreicht.

In einer zweiten Variante werden bei der Herstellung der TPU nach bekannter Weise (siehe unten) radikalisch polymerisierbare Monomere mit Gruppen (Alkokol-, Epoxid-, Amin-Gruppen) zugesetzt, die eine Polyadditionsreaktion mit Isocyanaten eingehen können. Als Monomere sind dabei besonders folgende Verbindungen bevorzugt: Hydroxyethylmethacrylat; 1,2- und 1,3-Dihydroxypropylmethacrylat; Glycidylmethacrylat, ortho-, meta- und para-Hydroxystyrol, meta- und para-Aminostyrol, Methacrylamid, 1,4-Butendiol, 1,4-Butindiol und/oder Polybutadiendiol.

TPU und Verfahren zu deren Herstellung sind vielfach beschrieben, beispielsweise Gerhard W. Becker und Dietrich Braun, Kunststoff Handbuch, Band 7 "Polyurethane", Carl Hanser Verlag München Wien 1993.

Bei allen in dieser Schrift genannten Molmassen, angegeben in [kg/mol], handelt es sich um die zahlenmäßig mittlere Molmasse.

In bevorzugten Ausführungsformen wird TPU durch Umsetzung aus einer Mischung von Isocyanaten (a) mit gegenüber Isocyanaten reaktiven Verbindungen (b), bevorzugt mit einem Molekulargewicht von 0,5 kg/mol bis 10 kg/mol und gegebenenfalls Kettenverlängerungsmitteln (c), bevorzugt mit einem Molekulargewicht von 0,05 kg/mol bis 0,5 kg/mol hergestellt.

In weiteren bevorzugten Ausführungsformen wird zur Herstellung von TPU der Mischung weiterhin mindestens ein Kettenregler (c1), ein Katalysator (d) und ggf. mindestens ein Füll-, Hilfs- und/oder Zusatzstoff zugesetzt. Die mit den Kleinbuchstaben gegebenenfalls zusätzlich mit Ziffer bezeichneten Substanzgruppen werden auch als Komponenten angesprochen.

Die bei der Herstellung der TPU üblicherweise verwendeten Komponenten (a), (b), (c), (c1), (d) und (e) werden im Folgenden beispielhaft beschrieben und umfassen die folgenden Stoffgruppen: Isocyanate (a), gegenüber Isocyanaten reaktive Verbindungen (b), Kettenverlängerer (c), Kettenregler (c1), Katalysatoren (d) und/oder mindestens ein üblicher Füll-, Hilfs- und/oder Zusatzstoff.

Zur Herstellung von TPU wird auf jeden Fall eine Mischung aus Isocyanaten (a) und gegenüber Isocyanaten reaktiven Verbindungen (b) benötigt. Der weitere Zusatz der Komponenten (c), (c1), (d) und (e) ist optional und kann einzeln oder in allen möglichen Variationen erfolgen. Dabei ist mit Komponente jeweils eine einzelne Substanz gemeint oder eine Mischung der zu dieser Komponente gehörenden Substanzen.

Die Komponenten Isocyanate (a), gegenüber Isocyanaten reaktive Verbindungen (b), und Kettenverlängerer (c) und, sofern verwendet, auch die Kettenregler (c1) werden als Aufbaukomponenten angesprochen.

In bevorzugten Ausführungsformen werden als organische Isocyanate (a) aliphatische, cycloaliphatische, araliphatische und/oder aromatische Isocyanate, weiter bevorzugte Diisocyanate eingesetzt. Beispiele für bevorzugte Diisocyanate sind Tri-, Tetra-, Penta-, Hexa-, Hepta- und/oder Oktamethylendüsocyanat, 2-Methylpentamethylendiisocyanat-1,5, 2-Ethylbutylendiisocyanat-1,4, Pentamethylendiisocyanat-1,5, Butylendiisocyanat-1,4, 1-Isocyanato-3,3,5-trimethyl-5-isocyanatomethylcyclohexan (Isophorondiisocyanat, IPDI), 1,4- und/oder 1,3-Bis(isocyanatomethyl)cyclohexan (HXDI), 1,4-Cyclohexandiisocyanat, 1-Methyl-2,4- und/oder-2,6-cyclohexandiisocyanat und/oder 4,4'-, 2,4'- und 2,2'-Dicyclohexylmethandiisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyldiphenyldiisocyanat, 1,2-Diphenylethandiisocyanat und Phenylendiisocyanat.

Besonders bevorzugt sind 4,4'-, 2,4'- und 2,2'-Diphenylmethandiisocyanat (MDI) sowie deren Gemische. Die organischen Diisocyanate können gegebenenfalls in untergeordneten Mengen, z.B. in Mengen bis zu 3 Mol-%, vorzugsweise bis zu 1 Mol-%, bezogen auf das organische Diisocyanat, durch ein tri- oder höherfunktionelles Polyisocyanat ersetzt werden, wobei dessen Menge jedoch so begrenzt werden muss, dass noch thermoplastisch verarbeitbare Polyurethane erhalten werden. Eine größere Menge an derartigen mehr als difunktionellen Isocyanaten wird zweckmäßigerweise durch die Mitverwendung von weniger als difunktionellen Verbindungen mit reaktiven Wasserstoffatomen ausgeglichen, so dass eine zu weit gehende chemische Vernetzung des Polyurethans vermieden wird.

Als gegenüber Isocyanaten reaktive Verbindungen (b) werden in bevorzugten Ausführungsformen Polyetherole, Polyesterole, und/oder Polycarbonatdiole, die üblicherweise auch unter dem Begriff "Polyole" zusammengefasst werden, verwendet.

TPU wird bevorzugt aus Polyetheralkohol hergestellt, besonders bevorzugt wird Polyetherdiol verwendet.

Geeignete Polyetherdiole können nach bekannten Verfahren, beispielsweise durch anionische Polymerisation von Alkylenoxiden mit Alkalihydroxiden, wie Natrium- oder Kaliumhydroxid, oder Alkalialkoholaten, wie Natriummethylat, Natrium- oder Kaliumethylat oder Kaliumisopropylat, als Katalysatoren und unter Zusatz mindestens eines Startermoleküls, das 2 bis 3, vorzugsweise 2, reaktive Wasserstoffatome gebunden enthält, oder durch kationische Polymerisation mit LewisSäuren als Katalysatoren aus einem oder mehreren Alkylenoxiden mit 2 bis 4 Kohlenstoffatomen im Alkylenrest hergestellt werden. Geeignete Alkylenoxide sind beispielsweise Tetrahydrofuran, 1,3-Propylenoxid und insbesondere bevorzugt Ethylenoxid und 1,2-Propylenoxid Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure und vorzugsweise zweiwertige, gegebenenfalls Etherbrücken gebunden enthaltende Alkohole, wie z.B. Ethandiol, Propandiol-1,2, Butandiol-1,4, Diethylenglykol, Hexandiol-1,6- und 2-Methylpentandiol-1,5. Die Startermoleküle können einzeln oder als Gemische eingesetzt werden. Insbesondere geeignet und bevorzugt sind die hydroxylgruppenhaltigen Polytetrahydrofurane (PTHF).

Die im wesentlichen linearen Polyetherole besitzen üblicherweise mittlere Molekulargewichte von 500 bis 8000, vorzugsweise 600 bis 6000, wobei das PTHF ein bevorzugtes mittleres Molekulargewicht von 500 bis 2500, insbesondere von 800 bis 2000, aufweist. Sie können sowohl einzeln als auch in Form von Mischungen untereinander zur Anwendung kommen.

Ein besonders bevorzugtes Polyetherdiol ist Polytetrahydrofuran. Bevorzugt werden die Polyetheralkohole und Polytetrahydrofuran mit einem Molekulargewicht zwischen 0,6 kg/mol und 2,5 kg/mol verwendet. Die Polyetheralkohole werden einzeln oder auch als Mischung verschiedener Polyetheralkohole eingesetzt.

In alternativen Ausführungsformen wird TPU aus Polyesteralkohol hergestellt. In einer bevorzugten Ausführungsform wird hierfür Polyesterdiol verwendet. Ein bevorzugtes Polyesterdiol wird aus Adipinsäure und Butan-1,4-diol hergestellt. Bevorzugte Ausführungsformen der Polyesteralkohole weisen ein Molekulargewicht zwischen 0,6 kg/mol und 2,5 kg/mol auf.

In weiter bevorzugten Ausführungsformen haben diese Polyole Molekulargewichte von 0,5 kg/mol bis 8 kg/mol, bevorzugt 0,6 kg/mol bis 6 kg/mol, insbesondere 0,8 kg/mol bis 4 kg/mol, und in weiter bevorzugten Ausführungsformen eine mittlere Funktionalität von 1,8 bis 2,3, weiter bevorzugt 1,9 bis 2,2, insbesondere 2. In einer besonders bevorzugten Ausführungsform ist das Polyol ein Polyesteralkohol, bevorzugt aus Polytetrahydrofuran synthetisiert, und hat in einer weiter bevorzugten Ausführungsform ein Molekulargewicht zwischen 0,6 kg/mol und 2,5 kg/mol.

Als Kettenverlängerer (c) werden in bevorzugten Ausführungsformen aliphatische, araliphatische, aromatische und/oder cycloaliphatische Verbindungen eingesetzt, die in weiter bevorzugten Ausführungsformen ein Molekulargewicht von 0,05 kg/mol bis 0,5 kg/mol haben. In einigen bevorzugten Ausführungsformen sind Kettenverlängerer (c) Verbindungen mit zwei funktionellen Gruppen, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen und entsprechende Oligo- und/oder Polypropylenglykole. In weiteren Ausführungsformen werden zur Herstellung von TPU Mischungen der Kettenverlängerer eingesetzt.

In einigen Ausführungsformen werden Kettenregler (c1), üblicherweise mit einem Molekulargewicht von 0,03 kg/mol bis 0,5 kg/mol verwendet. Kettenregler sind Verbindungen, die gegenüber Isocyanaten nur eine funktionelle Gruppe aufweisen. Beispiele für Ketteregler sind monofunktionelle Alkohole, monofunktionelle Amine, bevorzugt Methylamin, und/oder monofunktionelle Polyole. Durch Kettenregler kann das Fließverhalten der Gemische aus den einzelnen Komponenten gezielt eingestellt werden. Kettenregler werden in bevorzugten Ausführungsformen in einer Menge von 0 Gew.-Teile bis 5 Gew.-Teile, weiter bevorzugt von 0,1 Gew.-Teile bis 1 Gew.-Teile, bezogen auf 100 Gew.-Teile der gegenüber Isocyanaten reaktiven Verbindung b) eingesetzt. Kettenregler werden in Ergänzung zu Kettenverlängerern oder an Stelle dieser eingesetzt.

In weiteren Ausführungsformen werden zur TPU Herstellung mindestens ein Katalysator (d) verwendet, der insbesondere die Reaktion zwischen den NCO-Gruppen der Diisocyanate (a) und den gegenüber Isocyanaten reaktiven Verbindungen, bevorzugt Hydroxylgruppen der Aufbaukomponenten (b), (c) und c1 beschleunigt. In bevorzugten Ausführungsformen ist der Katalysator ausgewählt aus der Gruppe der tertiären Amine, wie zum Beispiel Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche Substanzen. In weiter bevorzugten Ausführungsformen ist der mindestens eine Katalysator aus der Gruppe der organischen Metallverbindungen ausgewählt und ist, exemplarisch genannt, Titansäureester, eine Eisenverbindung wie zum Beispiel Eisen-(III)- acetylacetonat, eine Zinnverbindung, zum Beispiel Zinndiacetat, Zinndioctanoat, Zinndilaurat oder ein Zinndialkylsalz einer aliphatischen Carbonsäure wie Dibutylzinndiacetat, Dibutylzinndilaurat oder ähnliche.

In einigen Ausführungsformen werden die Katalysatoren einzeln eingesetzt, in weiteren Ausführungsformen werden Mischungen von Katalysatoren eingesetzt. In bevorzugten Ausführungsformen ist der Katalysator oder die Mischung von Katalysatoren in Mengen von 0,0001 Gew.-Teilen bis 0,1 Gew.-Teilen pro 100 Gew.-Teile der gegenüber Isocyanaten reaktiven Verbindung (b), bevorzugt Polyhydroxylverbindung, eingesetzt.

Als Beispiele für Hilfs- und/oder Zusatzstoff (e) seien Hydrolyseschutzmittel und Flammschutzmittel genannt. Weitere Zusatzstoffe und Hilfsstoffe können Standardwerken wie beispielsweise o.g. Becker und Braun (1996) entnommen werden.

Neben Katalysatoren (d), aber auch ohne die Verwendung von Katalysatoren können den Aufbaukomponenten (a) bis (c) und gegebenenfalls (c1) auch Hydrolyseschutzmittel wie beispielsweise polymere und niedermolekulare Carbodiimide hinzugefügt werden.

Zur Einstellung der Shore-Härte von TPU können die Aufbaukomponenten (b) und (c) in relativ breiten molaren Verhältnissen variiert werden. In bevorzugten Ausführungsformen verhält sich das molare Verhältnisse von Komponente (b) zum insgesamt eingesetzten Kettenverlängerer (c) wie 10 : 1 bis 1 : 10, bevorzugt 5 : 1 bis 1 : 8, weiter bevorzugt wie 1 : 1 bis 1 : 4, wobei die Härte von TPU mit zunehmendem Gehalt an Kettenverlängerer (c) ansteigt. Auf diese Weise können Shore-Härten von A44 bis D80 eingestellt werden, besonders bevorzugt sind Shore-Härten von A44 bis A84. Die Shore-Härten werden nach der DIN 53505 bestimmt.

In weiter bevorzugten Ausführungsformen erfolgt die Umsetzung zu TPU bei üblichen Kennzahlen. Die Kennzahl ist definiert durch das Verhältnis der insgesamt bei der Umsetzung eingesetzten Isocyanatgruppen der Komponente (a) zu den gegenüber Isocyanaten reaktiven Gruppen, d.h. den aktiven Wasserstoffen, der Komponenten (b) und (c). Bei einer Kennzahl von 100 kommt auf eine Isocyanatgruppe der Komponente (a) ein aktives Wasserstoffatom, d.h. eine gegenüber Isocyanaten reaktive Funktion, der Komponenten (b) und (c). Bei Kennzahlen über 100 liegen mehr Isocyanatgruppen als gegenüber Isocyanaten reaktiven Gruppen, beispielsweise OH-Gruppen, vor.

In besonders bevorzugten Ausführungsformen erfolgt die Umsetzung zu TPU bei einer Kennzahl zwischen 60 und 120, weiter bevorzugt bei einer Kennzahl zwischen 80 und 110.

Die Herstellung von TPU wird bevorzugt nach einem der im Folgenden angesprochenen bekannten Verfahren durchgeführt. Bevorzugten Ausführungsformen sind das kontinuierliche Verfahren, beispielsweise mit Reaktionsextrudern, das Bandverfahren, das "One-shot" Verfahren oder das Prepolymerverfahren. Ebenfalls bevorzugte Ausführungsformen sind das diskontinuierliche Verfahren oder das Prepolymerprozess-Verfahren. Bei diesen Verfahren können die zur Reaktion kommenden Komponenten (a) und (b) sowie gegebenenfalls (c), (c1), (d) und/oder (e) nacheinander oder gleichzeitig miteinander vermischt werden, wobei die Reaktion der Komponenten (a) und (b) unmittelbar einsetzt.

Beim Extruderverfahren werden die Aufbaukomponenten (a) und (b) sowie gegebenenfalls die Komponenten (c), (c1), (d) und/oder (e) einzeln oder als Gemisch in den Extruder eingeführt und zum Beispiel bei Temperaturen von 100°C bis 280°C, vorzugsweise bei 140 °C bis 250 °C zur Reaktion gebracht. Das so erhaltene TPU wird extrudiert, abgekühlt und granuliert. Gegebenenfalls kann es zweckmäßig sein, das erhaltene TPU vor der Weiterverarbeitung bei 80°C bis 120°C, vorzugsweise bei 100°C bis 110°C über einen Zeitraum von 1 bis 24 Stunden zu tempern, d.h. dem Gemisch bei konstanter Temperatur die Möglichkeit zu geben weiter zu reagieren.

Bevorzugte TPU-Typen weisen einen größeren Anteil der Weichphase gegenüber der Hartphase, bevorzugt von 5 bis 30 Gew.-%, besonders bevorzugt von 10 bis 25 Gew.-% Weichphase, auf. Weiterhin ist der Stickstoffgehalt in der Hartphase bevorzugt höher.

Bevorzugte TPU-Typen sind zum Beispiel unter den Bezeichnungen Elastollan®1170 AU, Elastollan®1180, Elastollan®1175 A 10W000 und Elastollan®880 A 13N000 von der BASF Polyurethan GmbH, Lemförde, Deutschland, kommerziell erhältlich.

Besonders bevorzugt ist Elastollan®1170 AU, ein TPU, das aus den Polytetrahydrofurantypen 1000 und 2000 (die Zahlen beziehen sich auf das Molgewicht M_{w}, die Produkte sind zum Beispiel von der BASF SE kommerziell erhältlich), einem geringen Anteil 1,4-Butandiol und 4,4'-Diphenylmethandiisocyanat (MDI) erhältlich ist.

Die erfindungsgemäßen Polymerzusammensetzungen enthalten neben dem TPU 5 bis 95 Gew.-% (bezogen auf die Summe aus TPU und Styrolpolymeren) an einem oder mehreren durch radikalische Polymerisation erhältlichen Polymeren, die als Kamm-, Pfropf- oder Copolymere an das TPU gebunden sind. Bevorzugt beträgt deren Anteil 80 bis 30, besonders bevorzugt 75 bis 50, ganz besonders bevorzugt 75 bis 65 %.

Als durch radikalische Polymerisation erhältliche Polymere werden bevorzugt Polymere auf Basis von vinylisch ungesättigten Monomeren eingesetzt, beispielsweise (und bevorzugt) Styrol, Acrylate und Methacrylate, Vinylchlorid, Vinylacetat, Acrylnitril und Mischungen davon.

Bevorzugt sind Styrolpolymere.

Erfindungsgemäß umfasst der Begriff Styrolpolymer Polymere auf Basis von Styrol, alpha-Methylstyrol oder Mischungen von Styrol und alpha-Methylstyrol. Erfindungsgemäße Styrolpolymere basieren auf mindestens 50 Gew.-% Styrol und/oder alpha-Methylstyrol-Monomeren.

Bevorzugt sind als Styrolpolymere Polystyrol, Poly-alpha-methylstyrol und Styrol-alpha-Methylstyrol-Copolymere, möglich sind weiterhin , Styrol-Butadien-Copolymere (SB), Styrol-Acrylnitril-Copolymere (SAN), Acrylnitril-alpha-Methylstyrol-Copolymere (AMSAN), Styrol-Maleinsäureanhydrid-Copolymere (SMA), Styrol-Methylmethacrylat-Copolymere (SMMA), Styrol-N-Phenylmaleinimid-Copolymere (SPMI), Acrylnitril-Styrol-Acrylester (ASA), Methylmethacrylat-Butadien-Styrol (MBS), Methylmethacrylat-Acrylnitril-Butadien-Styrol (MABS)-Polymerisate oder Mischungen davon. Insbesondere bevorzugt ist Polystyrol, d.h. der Einsatz vom Styrolmonomeren.

Die erfindungsgemäßen Polymerzusammensetzungen zeichnen sich durch eine besondere TPU Phasen-Morphologie aus, welche aus einer kontinuierlichen Phase aus TPU Homopolymer und einer diskontinuierlichen Phase aus dem Graftpolymer von TPU und dem durch radikalische Polymerisation erhältlichen Polymer besteht. Dabei besitzt die TPU-Phase idealerweise eine wie in Fig. 2 (TEM Aufnahme) gezeigte Phasenmorphologie. Das Graftpolymer aus TPU und dem durch radikalische Polymerisation erhältlichen Polymer bildet dabei runde bis ellipsenförmige diskontinuierliche Phasen mit einem Durchmesser zwischen 50 und 500 nm aus. Diese sind von einem geschlossenen kontinuierlichen TPU Netzwerk umgeben. Die Figur 2 gibt die REM Aufnahme eines Polymerisates aus 40 Gew.-% TPU und 60 Gew.-% Polystyrol wieder. Die Polystyrolphase wurde mit RuO₄ von der TPU Phase kontrastiert.

Ein wesentliches Element der Erfindung ist, dass die oben beschriebene Polymerstruktur durch radikalische Polymerisation eines oder mehrerer Monomere in dem von diesen Monomer(en) durchquollenen TPU Netzwerk oder in einem Lösungsmittel, in dem das TPU gelöst ist, unter geeigneten Bedingungen erhalten werden kann.

Als Zusammensetzung für vorzugsweise erfindungsgemäße Spritzgussanwendungen handelt es sich bei den erfindungsgemäßen Zusammensetzungen nicht um expandierbare Polymerpartikel.

Die erfindungsgemäßen Polymerzusammensetzungen können auch als Blends mit weiteren Polymeren eingesetzt werden. Die Herstellungsmethoden für solche Blends sind dem Fachmann bekannt.

Neben der Polymerkomponente enthalten die erfindungsgemäßen Polymerzusammensetzungen vorzugsweise eine Additivkomponente. Geeignete Additive sind dem Fachmann bekannt.

In einer bevorzugten Ausführungsform wird der Polymerzusammensetzung wenigstens ein Füllstoff zugesetzt. Als Füllstoffe können zum Beispiel feinteilige, anorganische Feststoffe wie Talkum, Siliziumdioxid, Mika, Ton, Zeolithe, Calciumcarbonat, Titandioxid, Aluminiumpulver und/oder mineralische Füllstoffe wie Glasfasern eingesetzt werden in Mengen von im Allgemeinen 0,1 bis 10 Gew.-%, bevorzugt 0,1 bis 3 Gew.-%, besonders bevorzugt 0,1 bis 1,5 Gew.-%, bezogen auf die Polymerzusammensetzung eingesetzt werden.

Gewünschtenfalls können weitere Additive, wie Weichmacher, Flammschutzmittel, Ruß zum Einfärben, lösliche und unlösliche Farbstoffe, Pigmente, UV-Stabilisatoren und/oder thermische Stabilisatoren zugegeben werden.

Als vorteilhaft hat sich der Einsatz von UV-Stabilisatoren erwiesen. Speziell bei Polymeren wie SMA führt starke UV-Einstrahlung zu einer sichtbaren Vergilbung und zur chemischen Umwandlung des Materials, die mit einer signifikanten Versprödung einhergeht. Für die Wahl geeigneter UV-Stabilisatoren spielt die Reaktivität eine entscheidende Rolle. Während Stabilisatoren auf Basis von Benzotriazolen wie Tinuvin 234 die UV-Beständigkeit ohne Veränderung der Verarbeitungseigenschaften verbessern kann, eignen sich Stabilisatoren auf Basis sterisch gehinderter Amine wie Uvinul 4050 und Tinuvin 770 in geringerem Maße für die erfindungsgemä-βen Polymerzusammensetzungen.

Bevorzugt enthält das erfindungsgemäße Granulat als Additiv einen UV-Stabilisator auf Basis von Benzotriazolen in Mengen im Bereich von 0,05 bis 5 Gewichtsanteilen, bevorzugt 0,1 bis 1 Gewichtsanteilen, bezogen auf 100 Gewichtsteile Polymer.

Aufgrund der Brandschutzbestimmungen in verschiedenen Industrien werden vorzugsweise ein oder mehrere Flammschutzmittel zugegeben. Geeignete Flammschutzmittel sind beispielsweise Tetrabrombisphenol A, bromierte Polystyrol Oligomere, bromierte Butadien-Polystyrol-Copolymere gemäß WO 2007/058736, Tetrabrombisphenol-A-diallylether und Hexabromcyclododecan (HBCD), insbesondere die technischen Produkte, welche im Wesentlichen das α-, β- und γ-Isomer und einen Zusatz von Synergisten wie Dicumyl enthalten. Bevorzugt sind bromierte Aromaten, wie Tetrabrombisphenol A, und bromierte Styrololigomere. Als halogenfreie Flammschutzmittel eignen sich beispielsweise Blähgraphit, roter Phosphor und Phosphorverbindungen, wie Triphenylphosphat und 9,10-Dihydro-9-oxa-10-phosphaphenanthren-10-oxid.

Als Phosphorverbindungen sind bevorzugt Tris(2-chlorisopropyl)phosphat, Phosphorsäuretriethylester, Diethylethylphosphonat, Cresyldiphenylphosphate, Exolit OP560, Phosphorsäure-6-(diphenoxy-phosphoryloxy)-hexahydro-furo[3,2-b]-furan-3-yl-ester-diphenylester, 9,10-Dihydro-9-oxa-10-phosphaphenanthren-10-oxid oder 6H-Dibenz[c,e][1,2]oxaphosphorin-6-oxid.

Bevorzugt sind weiterhin organische Peroxide (Dicumylperoxid), Schwefel und Disulfide als Synergisten. Die oben genannten Flammschutzmittel können entweder vor Beginn der Polymerisation in den Monomeren gelöst werden oder durch Extrusion im TPU eingearbeitet werden.

Die Gesamtmenge an Additiven beträgt im Allgemeinen 0 bis 5 Gew.-%, vorzugsweise 0 bis 0,5 Gew.-%, bezogen auf das Gesamtgewicht der eingesetzten Polymere.

Die erfindungsgemäßen Polymerzusammensetzungen sind erhältlich durch ein Verfahren zur Herstellung umfassend die Schritte
a) Dispergieren eines oder mehrerer TPU mit einer Vicat-Temperatur von weniger als 80°C, 5 bis 95 Gew.-% eines oder mehrerer radikalisch polymerisierbare Monomere und gegebenenfalls Comonomere, bezogen auf die Summe aus TPU und den genannten Monomeren, eines Polymerisationsinitiators, eines Dispergiermittels und gegebenenfalls weiterer Zusatzstoffe und/oder Polymerisationshilfsstoffe in einem wässrigen Medium bei einer Temperatur, bei der keine substantielle Polymerisation der radikalisch polymerisierbaren Monomere erfolgt;
b) gegebenenfalls Rühren der erhaltenen Dispersion für eine bis 24 h bei einer Temperatur, bei der keine substantielle Polymerisation der radikalische polymerisierbaren Monomere stattfindet, und
c) Polymerisation der radikalisch polymerisierbaren Monomere in Form eines Kamm-, Pfropf- oder Copolymers an das TPU.

Bevorzugt besteht das Verfahren aus den Schritten a) bis c).

Bei der erfindungsgemäßen Suspensionspolymerisation wird gemäß dem oben Gesagten bevorzugt Styrol allein eingesetzt. Alternativ können auch andere radikalisch polymerisierbare Monomere, wie Alkylstyrole, Divinylbenzol, 1,4-Butandioldimethacrylat, Acrylnitril, Diphenylether oder α-Methylstyrol und Acrylate verwendet werden.

Bei der Suspensionspolymerisation können die üblichen Hilfsmittel, wie Peroxidinitiatoren, Suspensionsstabilisatoren, Kettenüberträger und Weichmacher zugesetzt werden.

Weiterhin können die genannten Hilfs- und Zusatzstoffe der Suspension in Mengen von 3 bis 15 Gew.-%, bezogen auf die Summe aus Monomer und TPU, zugesetzt werden. Man kann sie vor, während oder nach der Polymerisation der Suspension zusetzen.

Es ist vorteilhaft, als Suspensionsstabilisatoren anorganische Pickering Dispergatoren, zum Beispiel Magnesiumpyrophosphat oder Calciumphosphat einzusetzen.

Das verwendete TPU kann, bevor es in der Polymerisation eingesetzt wird durch Unterwassergranulierung zu einem Minigranulat mit einem mittleren Durchmesser von 0,5 bis 1,5 mm verarbeitet werden. So wird nach der Polymerisation ein Produkt mit einer Partikelgröße erhalten, welches auf handelsüblichen EPS Maschinen verarbeitet werden kann. Weiterhin können Nukleierungsmittel wie Talkum oder Polyethylenwachse in Mengen von 0,01 bis 15 Gew.-% mittels Extrusion in das verwendete Polyurethan eingearbeitet werden.

Eine bevorzugte Ausführungsform des Verfahrens ist dadurch gekennzeichnet, dass zunächst eine wässrige Phase, welche 0,1 bis 10 Gew-% der oben genannten Pickeringstabilisatoren, 0,1 bis 0,001 Gew-% eines Tensides (zum Beispiel Natriumdodecylsulfonat) und 1 bis 90 Gew-% TPU Granulat enthält, in einem rührbaren Druckautoklaven vorgelegt werden.

Das Monomer, welches gegebenenfalls die oben genannten Hilfsmittel, wie Initiatoren und Flammschutzmittel enthält, wird bei Raumtemperatur bzw. unterhalb der Polymerisationstemperatur in den gerührten Reaktor dosiert. In einer Variation des Verfahrens wird das TPU zunächst bei Raumtemperatur mit dem Monomer, welches die oben genannten Hilfsmittel wie Initiatoren und gegebenenfalls Flammschutzmittel enthält, unter Abwesenheit von Wasser zusammengegeben und für 0,5 bis 24 Stunden quellen gelassen. Anschließend wird das von Monomer durchquollene Granulat ebenfalls in den Polymerisationsreaktor überführt, in dem sich die wässrige Phase mit dem oben genannten Pickeringstabilisator und dem Tensid befindet.

Es hat sich als vorteilhaft erwiesen, die Reaktionsmischung eine gewisse Zeit (ca. 1 bis 5 Stunden) bei einer erhöhten Temperatur unterhalb der Polymerisationstemperatur zu rühren (vorzugsweise zwischen 10 und 60, zum Beispiel bei 50 °C), um das Anquellen des TPU-Granulats mit dem Monomergemisch zu begünstigen. Anschließend wird die Reaktionsmischung auf die Polymerisationstemperatur aufgeheizt. Überraschenderweise wurde gefunden dass bei einer bevorzugten Polymerisationstemperatur von 110 bis 140 °C (Verwendung eines Peroxidinitiators mit T1/2= 1 h bei 120 bis 135 °C) es zu einer vermehrten Bildung des oben beschriebenen Copolymers aus TPU und Polystyrol kommt.

Bei der Suspensionspolymerisation entstehen perlförmige, im Wesentlichen runde Teilchen mit einem mittleren Durchmesser im Bereich von 0,5 bis 4 mm, wenn mikrogranuliertes TPU eingesetzt wurde bzw. 0,5 bis 2 cm große Teilchen, wenn auf eine Mikrogranulierung des TPU verzichtet wurde. Sie können mit den üblichen Beschichtungsmitteln, zum Beispiel feinteiligen Silicaten beschichtet werden. Hierbei hat es sich als besonders praktikabel erwiesen, das Polymerisat mit 0,1 bis 1 Gew.-% hydrophiler Kieselsäure (Sipernat® FK320; *Fa. Evonic*) zu beschichten.

Weiterhin Gegenstand der Erfindung ist ein Verfahren zur Herstellung einer Polymerzusammensetzung, insbesondere für Spritzgussanwendungen, umfassend die Schritte
a) Lösen eines oder mehrerer TPU mit einer Vicat-Temperatur von weniger als 80°C und gegebenenfalls weiterer Zusatzstoffe und/oder Polymerisationshilfsstoffe in einem Lösungsmittel;
b) Erhitzen der Lösung auf eine Temperatur, bei welcher die Polymerisation der in Schritt c) zugeführten Monomere stattfindet,
c) Zufuhr von 5 bis 95 Gew.-% eines oder mehrerer radikalisch polymerisierbarer Monomere (bezogen auf die Summe aus TPU und dem oder den radikalisch polymerisierbaren Monomeren) sowie von einem oder mehreren Polymerisationsinitiatoren.

Bevorzugt besteht das Verfahren aus den Schritten a) bis c).

Bei der erfindungsgemäßen Lösungspolymerisation wird gemäß dem oben Gesagten bevorzugt Styrol allein eingesetzt. Alternativ können auch andere radikalisch polymerisierbare Monomere, wie Alkylstyrole, Divinylbenzol, 1,4-Butandioldimethacrylat, Acrylnitril, Diphenylether oder α-Methylstyrol und Acrylate verwendet werden.

Als Lösungsmittel eignen sich beispielsweise cyclische Ether, bevorzugt THF und Dioxan, besonders bevorzugt Dioxan.

Bei der Lösungspolymerisation können die üblichen Hilfsmittel, wie Peroxidinitiatoren, Kettenüberträger und Weichmacher zugesetzt werden.

Weiterhin können die genannten Hilfs- und Zusatzstoffe der Lösung in Mengen von 3 bis 15 Gew.-%, bezogen auf die Summe aus Monomer und TPU, zugesetzt werden. Man kann sie der Lösung vor, während oder nach der Polymerisation zusetzen.

Eine bevorzugte Ausführungsform des Verfahrens ist dadurch gekennzeichnet, dass zunächst TPU, gelöst in dem Lösungsmittel (zum Beispiel Dioxan oder THF) in einem rührbaren Druckautoklaven vorgelegt wird. Anschließend wird auf eine Temperatur erhöht, bei der die Polymerisation der radikalisch polymerisierbaren Monomere stattfindet (vorzugsweise 95 bis 130 °C). Dann wird eine Lösung des Polymerisationsinitiators (vorzugsweise Dibenzoylperoxid oder Dicumylperoxid) in dem radikalisch polymerisierbaren Monomer (vorzugsweise Styrol) langsam kontinuierlich zudosiert. Nach mehrstündigem Nachrühren wird noch einmal eine geringere Menge Polymerisationsinitiator zudosiert und weiter für mehrere Stunden nachgerührt. Die erfindungsgemäße Polymerzusammensetzung kann durch Entfernen des Lösungsmittels isoliert werden.

Nach Verarbeitung im Spritzguss zeigen die durch Lösungspolymerisation hergestellten Polymerzusammensetzungen eine noch feinere Phasenverteilung zwischen TPU-Homopolymer und TPU-Graftpolymer.

Die erfindungsgemäße Polymerzusammensetzung eignet sich insbesondere zur Herstellung von Formteilen durch Spritzguss. Erfindungsgemäße Formteile eignen sich neben den oben genannten Anwendungen beispielsweise für Anwendungen im Automobilbau, der Schuhherstellung, im Sport- und Freizeitbereich, in der Landwirtschaft und der Fischerei.

Die Erfindung wird durch die Beispiele näher erläutert.

### Beispiele

### Magnesiumpyrophosphat (MPP)-Fällung

In den Beispielen 1 bis 4 wurde eine amorphe MPP-Fällung als Pickering-Stabilisator eingesetzt. Es ist entscheidend, dass die verwendete MPP-Fällung frisch zubereitet wurde (maximal 12 Stunden alt), da sonst keine ausreichende Stabilisierung der Reaktionsansätze erfolgen kann. Die MPP-Fällung kann wie folgt hergestellt werden:
Bei Raumtemperatur (25 °C) werden 931,8 g Natriumpyrophosphat (*Fa. Giulini*) in 32 I Wasser gelöst. Unter Rühren wird zu dieser Lösung eine Lösung von 1728 g Magnesiumsulfatheptahydrad (Bittersalz) zugegeben und anschließend für weitere 5 Minuten gerührt. Es entsteht eine weiße Suspension, welche sich nach einigen Minuten absetzt. In den beschriebenen Beispielen wird die oben genannte Suspension nach kurzem Aufrühren/Schütteln direkt eingesetzt.

### TPU Granulat:

Es wird handelsübliches Polyether-basiertes TPU (Elastollan® 1170AU, Elastollan® 1180A) der BASF Polyurethanes GmbH eingesetzt. Es hat sich als vorteilhaft erwiesen, das TPU mittels Extruder und Unterwassergranuliereinheit in ein Mikrogranulat mit einer Partikelgröße zwischen 0,5 bis 2 mm zu überführen, um bei der Suspensionspolymerisation die Durchführung im Polymerisationsreaktor und während des Quellvorgangs zu erleichtern.

### Beispiel 1: Herstellung von TPU Polystyrol 60:40 Copolymer

480 g Styrol, 3,4 g Dicumylperoxid und 720 g Elastollan 1170AU Mikrogranulat wurden in eine 2 I Polyethylenflasche gegeben und zwecks Quellung, 2 h lang auf einem Rollbrett in Bewegung gehalten.

Das gequollene TPU wurde in einen 6 I Druckautoklaven [EPS-Reaktor, maximal Druck: 20 bar, Blattrührer (Rührerdrehzahl 300 U/Min) überführt in dem sich 3 kg VE-Wasser, 803 g MPP-Fällung und 42 g 2%ige Lösung des Emulgators E30 (hergestellt aus E30-40 der Fa. Leuna Tenside GmbH) befand. Nachdem der Reaktor verschlossen und mit Stickstoff beaufschlagt wurde (Inertisierung), wurde folgendes Temperaturprofil gestartet:
0,5 Stunden heizen von 20 °C auf 50 °C
2 Stunden eine Temperatur von 50 °C halten
1 Stunde heizen von 50 °C auf 125 °C
8 Stunden eine Temperatur von 125 °C halten

Die erhaltenen Polymerisationsperlen wurden abdekantiert und von Innenwasser getrocknet.

### Beispiel 2:

Beispiel 1 wurde wiederholt, anstelle von Elastollan 1170AU wurde Mikrogranluat von Elastollan 1180A verwendet. Figur 1 zeigt die REM Aufnahme eines des Polymerisates aus Beispiel 2 (40 Gew% Polystyrol). Die Polystyrolphase wurde mit RuO4 von der TPU Phase kontrastiert.

### Beispiel 3: Herstellung von TPU Polystyrol 40:60 Copolymer

Beispiel 1 wurde mit folgenden Einsatzstoffmengen wiederholt:
720 g Styrol, 5,1 g Dicumylperoxid und 480 g Elastollan 1170AU

### Beispiel 4

Beispiel 2 wurde wiederholt. Anstelle von Elastollan 1170AU wurde Mikrogranulat von Elasto-Ilan 1180A verwendet.

### Beispiel 5: Herstellung von TPU Polystyrol 33:67 Lösungspolymerisat

In einem 2 I HWS-Reaktor, mit Thermoelement, Thermostat, Rückflusskühler und Blattrührer wurden 150 g Elastollan 1170AU in 750 g Dioxan gelöst. Die Lösung wurde auf 98 °C erhitzt, anschließend wurde über einen Zeitraum von 120 Minuten eine Lösung von 12 g Dibenzoylperoxid (75%iges) in 300g Styrol dosiert. Nach weiteren 3,5 h bei 98 °C wurde die Temperatur auf 95 °C erniedrigt und es wurden 6 g Dibenzoylperoxid (75%iges) zudosiert. Die Temperatur wurde für weitere 3 h gehalten, anschließend wurde das Polymer durch Entfernen des Lösungsmittels (Vakuumtrockenschrank oder Rotationsverdampfer) isoliert.

### Beispiel 6: Verarbeitung der Polymerisate im Spritzguss

17 g der Polymerisate aus Beispiel 2 und 5 wurden in einem Mini-Extruder (DSM Microcompounder 15cc mit konische Doppelschnecke) gemischt (Temperatur=190 °C; SchmelzeTemperatur = 181 °C; Drehzahl = 80 Upm; Mischzeit = 3 Minuten) und direkt in einer Spritzgussmaschine (Micro-injection moulding machine 10cc) zu Zugstäben verarbeitet (Temperatur Zugstabform: 40 °C; Temperatur Schmelzebehälter: 190 °C).

Figur 2 zeigt die REM Aufnahme eines Spritzgusskörpers aus Beispiel 3 (40 Gew% TPU 60 Gew% Polystyrol). Die Polystyrolphase wurde mit RuO4 von der TPU Phase kontrastiert.

Figur 3 zeigt PS/TPU Graftpolymer 54:46 gemäß Beispiel 5 nach Spritzguss.

### Vergleichsbeispiel 1:

Beispiel 6 wurde wiederholt, allerdings wurde der Extruder mit 17 g eines Gemenges aus Polystyrol 158 K (Fa. Styrolution) und Elastollan 1170AU beschickt.

Figur 4 zeigt die REM Aufnahme eines Blends (Extrusionstemperatur 190 °C) aus TPU (Elasto-Ilan 1170AU) und Polystyrol gemäß Vergleichsbeispiel 1. Die Polystyrolphase wurde mit RuO4 von der TPU Phase kontrastiert.

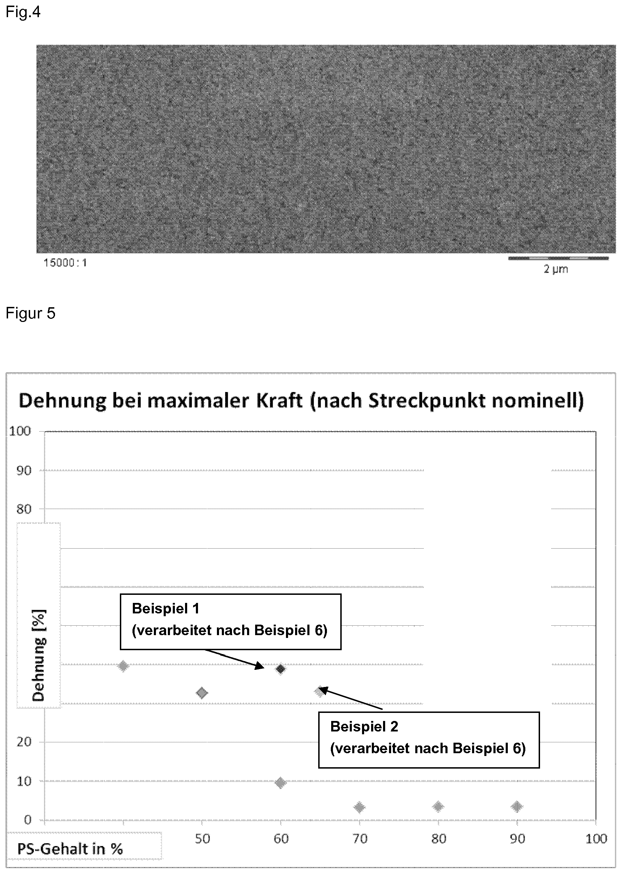

Als Beispiel für die hohe Elastizität erfindungsgemäßer Zusammensetzungen dient die Dehnung bei maximaler Kraft (gemessen nach ISO527-2):
In dem in Figur 5 gezeigten Diagramm ist die prozentuale Dehnung bei maximaler Kraft (gemessen nach ISO527-2) verschiedener TPU Blends (◆ hergestellt nach Vergleichsbeispiel 1) gegen den Polystyrolanteil aufgetragen. Man erkennt dass die Elastizität der Materialien bei einem Polystyrolanteil von ca. 60 % deutlich abnimmt. Die Materialien aus Beispiel 1 und Beispiel 2 (verarbeitet gemäß Beispiel 6) besitzen dagegen trotz hohem Polystyrolanteil eine große Elastizität.

## Patentansprüche

1. Polymerzusammensetzung, insbesondere für Spritzgussanwendungen, enthaltend mindestens ein thermoplastisches Polyurethan (TPU) mit einer Vicat-Temperatur, gemessen nach ISO 306/A50, von unter 80°C und 5 bis 95 Gew.-% mindestens eines durch radikalische Polymerisation erhältlichen Polymers, bezogen auf die Summe von TPU und dem durch radikalische Polymerisation erhältlichen Polymer, wobei das durch radikalische Polymerisation erhältliche Polymer als Kamm-, Pfropf- oder Copolymer an das TPU gebunden ist und wobei das TPU funktionelle Gruppen enthält, welche unter den typischen Bedingungen einer radikalischen Polymerisation ein Kamm-, Pfropf- oder Copolymer mit den radikalisch polymerisierbaren Monomeren des durch radikalische Polymerisation erhältlichen Polymers ausbilden,
wobei expandierbare Polymerpartikel, enthaltend mindestens ein thermoplastisches Polyurethan (TPU) mit einer Vicat-Temperatur (nach ISO 306/ASO) von unter 80°C und 5 bis 95 Gew.-%, mindestens eines durch radikalische Polymerisation erhältlichen Polymers, bezogen auf die Summe von TPU und dem durch radikalische Polymerisation erhältlichen Polymer, wobei das Styrolpolymer als Kamm-, Pfropf- oder Copolymer an das TPU gebunden ist, ausgenommen sind.

2. Polymerzusammensetzung nach Anspruch 1 für Spritzgussanwendungen.

3. Polymerzusammensetzung gemäß Anspruch 1 oder 2, wobei das durch radikalische Polymerisation erhältliche Polymer ein Styrolpolymer ist.

4. Polymerzusammensetzung gemäß einem der Ansprüche 1 bis 3, wobei das Styrolpolymer Polystyrol ist.

5. Polymerzusammensetzung gemäß einem der Ansprüche 1 bis 4, wobei die Vicat-Temperatur des verwendeten TPU im Bereich von 60 bis 75 °C liegt.

6. Polymerzusammensetzung gemäß einem der Ansprüche 1 bis 5 mit einer Shore-Härte des TPU im Bereich von 50 bis 100, gemessen nach DIN 53505.

7. Polymerzusammensetzung gemäß einem der Ansprüche 1 bis 6, wobei das TPU eine Glasübergangstemperatur im Bereich von -20 bis -60 °C, gemessen nach ISO 11357/- 1/-2, hat.

8. Polymerzusammensetzung gemäß einem der Ansprüche 1 bis 7, wobei die Diisocyanatkomponente in dem TPU gewählt ist aus 4,4'-Diphenylmethandiisocyanat, 2,4'-Diphenylmethandiisocyanat und 2,2'- Diphenylmethandiisocyanat.

9. Polymerzusammensetzung gemäß einem der Ansprüche 1 bis 8, wobei das TPU erhältlich ist aus 4,4'-Diphenylmethandiisocyanat, Polytetrahydrofuranen und 1,4-Butandiol.

10. Polymerzusammensetzung gemäß Anspruch 9, wobei die Polytetrahydrofurane Polytetrahydrofuran 1000 und Polytetrahydrofuran 2000 sind.

11. Verfahren zur Herstellung einer Polymerzusammensetzung insbesondere für Spritzgussanwendungen gemäß einem der Ansprüche 1 bis 10, umfassend die Schritte
a) Dispergieren eines oder mehrerer TPU mit einer Vicat-Temperatur von weniger als 80°C, 5 bis 95 Gew.-% eines oder mehrerer radikalisch polymerisierbarer Monomere, bezogen auf die Summe aus TPU und den genannten Monomeren, eines Polymerisationsinitiators, eines Dispergiermittels und gegebenenfalls weiterer Zusatzstoffe und/oder Polymerisationshilfsstoffe in einem wässrigen Medium bei einer Temperatur, bei der keine substantielle Polymerisation der Monomere erfolgt, wobei das TPU funktionelle Gruppen enthält, welche unter den typischen Bedingungen einer radikalischen Polymerisation ein Kamm-, Pfropf- oder Copolymer mit den radikalisch polymerisierbaren Monomeren ausbilden,
b) gegebenenfalls Rühren der erhaltenen Dispersion für eine bis 24 h bei einer Temperatur, bei der keine substantielle Polymerisation der Monomere stattfindet,
c) Polymerisation der Monomere in Form eines Kamm-, Pfropf- oder Copolymers an das TPU.

12. Verfahren zur Herstellung einer Polymerzusammensetzung, insbesondere für Spritzgussanwendungen gemäß einem der Ansprüche 1 bis 11, umfassend die Schritte
a) Lösen eines oder mehrerer TPU mit einer Vicat-Temperatur von weniger als 80°C und gegebenenfalls weiterer Zusatzstoffe und/oder Polymerisationshilfsstoffe in einem Lösungsmittel, wobei das TPU funktionelle Gruppen enthält, welche unter den typischen Bedingungen einer radikalischen Polymerisation ein Kamm-, Pfropf- oder Copolymer mit den in Schritt c) zugeführten Monomeren ausbilden,
b) Erhitzen der Lösung auf eine Temperatur, bei welcher die Polymerisation der in Schritt c) zugeführten Monomere stattfindet,
c) Zufuhr von 5 bis 95 Gew.-% eines oder mehrerer radikalisch polymerisierbarer Monomere (bezogen auf die Summe aus TPU und dem oder den radikalisch polymerisierbaren Monomeren) und eines oder mehreren Polymerisationsinitiatoren.

13. Verfahren gemäß Anspruch 11 oder 12, **dadurch gekennzeichnet, dass** die Polymerisation in Gegenwart eines bromierten organischen und/oder phosphorhaltigen Flammschutzmittels und/oder organischer Peroxide durchgeführt wird.

14. Verfahren gemäß einem der Ansprüche 11 bis 13, **dadurch gekennzeichnet, dass** die Polymerisation in Gegenwart eines Vernetzers durchgeführt wird.

15. Verfahren gemäß einem der Ansprüche 11 bis 14, wobei die Polymerisation bei einer Temperatur von 80 bis 140 °C durchgeführt wird.

16. Verfahren gemäß einem der Ansprüche 11, 13, 14 oder 15, **dadurch gekennzeichnet, dass** unterhalb der Polymerisationstemperatur das thermoplastische Polyurethan in einer Lösung aus radikalisch polymerisierbaren Monomeren, Initiator sowie gegebenenfalls Hilfs- und Zusatzstoffen angequollen wird und die Polymerisationstemperatur deutlich oberhalb der Temperatur liegt, bei welcher der Anquellvorgang durchgeführt wird.

17. Verfahren gemäß Anspruch 16, wobei die Polymerisation zwischen 110 und 140°C und das Anquellen zwischen 10 und 60°C erfolgt.

18. Verfahren gemäß einem der Ansprüche 11, 13 oder 14 **dadurch gekennzeichnet, dass** die wässrige Phase einen Pickeringstabilisator in Kombination mit einem Tensid und/oder einem Schutzkolloid enthält.

19. Formteil, erhältlich durch Spritzguss einer Polymerzusammensetzung gemäß einem der Ansprüche 1 bis 10.

20. Verwendung eines Spritzgussteils gemäß Anspruch 19 als Kabelisolierung, Schleppkabel, Pneumatikschlauch, Spiralschlauch, Zahnriemen, Förderschlauch oder Hydraulikschlauch.

## Claims

1. A polymer composition, in particular for injection-molding applications, comprising at least one thermoplastic polyurethane (TPU) with a Vicat softening point, measured in accordance with ISO 306/A50, below 80°C and from 5 to 95% by weight of at least one polymer obtainable via free-radical polymerization, based on the entirety of TPU and of the polymer obtainable via free-radical polymerization, where the polymer obtainable via free-radical polymerization has been bonded in the form of comb polymer, graft polymer, or copolymer to the TPU, and wherein the TPU comprises functional groups which form, under the typical conditions of a free-radical polymerization, a comb polymer, graft polymer, or copolymer with the monomers of the polymer obtainable via free-radical polymerization that are polymerizable by a free-radical route,
excluding expandable polymer particles comprising at least one thermoplastic polyurethane (TPU) with a Vicat softening point (in accordance with ISO 306/A50) below 80°C and from 5 to 95% by weight of at least one polymer obtainable via free-radical polymerization, based on the entirety of TPU and of the polymer obtainable via free-radical polymerization, where the styrene polymer has been bonded in the form of comb polymer, graft polymer, or copolymer to the TPU.

2. The polymer composition according to claim 1 for injection-molding applications.

3. The polymer composition according to claim 1 or 2, where the polymer obtainable via free-radical polymerization is a styrene polymer.

4. The polymer composition according to any of claims 1 to 3, where the styrene polymer is polystyrene.

5. The polymer composition according to any of claims 1 to 4, where the Vicat softening point of the TPU used is in the range from 60 to 75°C.

6. The polymer composition according to any of claims 1 to 5, where the Shore hardness of the TPU is in the range from 50 to 100, measured in accordance with DIN 53505.

7. The polymer composition according to any of claims 1 to 6, where the glass transition temperature of the TPU is in the range from -20 to -60°C, measured in accordance with ISO 11357/- 1/-2.

8. The polymer composition according to any of claims 1 to 7, where the diisocyanate component in the TPU is one selected from diphenylmethane 4,4'-diisocyanate, diphenylmethane 2,4'-diisocyanate, and diphenylmethane 2,2'-diisocyanate.

9. The polymer composition according to any of claims 1 to 8, where the TPU is obtainable from diphenylmethane 4,4'-diisocyanate, polytetrahydrofurans, and 1,4-butanediol.

10. The polymer composition according to claim 9, where the polytetrahydrofurans are Polytetrahydrofuran 1000 and Polytetrahydrofuran 2000.

11. A process for producing a polymer composition, in particular for injection-molding applications according to any of claims 1 to 10, comprising the following steps:
a) dispersion of one or more TPUs with a Vicat softening point below 80°C, from 5 to 95% by weight of one or more monomers polymerizable by a free-radical route, based on the entirety of TPU and of the monomers mentioned, of a polymerization initiator, of a dispersing agent, and optionally of other additional substances and/or polymerization aids in an aqueous medium at a temperature at which no substantial polymerization of the monomers takes place, wherein the TPU comprises functional groups which form, under the typical conditions of a free-radical polymerization, a comb polymer, graft polymer, or copolymer with the monomers polymerizable by a free-radical route,
b) optionally stirring of the resultant dispersion for from one to 24 h at a temperature at which no substantial polymerization of the monomers takes place, and
c) polymerization of the monomers in the form of a comb polymer, graft polymer, or copolymer, onto the TPU.

12. A process for producing a polymer composition, in particular for injection-molding applications according to any of claims 1 to 11, comprising the following steps:
a) dissolution of one or more TPUs with a Vicat softening point below 80°C and optionally of other additional substances and/or polymerization aids in a solvent, wherein the TPU comprises functional groups which form, under the typical conditions of a free-radical polymerization, a comb polymer, graft polymer, or copolymer with the monomers introduced into step c),
b) heating of the solution to a temperature at which the polymerization of the monomers introduced into step c) takes place, and
c) introduction of from 5 to 95% by weight of one or more monomers polymerizable by a free-radical route (based on the entirety of TPU and of the monomer(s) polymerizable by a free-radical route) and of one or more polymerization initiators.

13. The process according to claim 11 or 12, wherein the polymerization is carried out in the presence of a brominated organic and/or phosphorus-containing flame retardant and/or of organic peroxides.

14. The process according to any of claims 11 to 13, wherein the polymerization is carried out in the presence of a crosslinking agent.

15. The process according to any of claims 11 to 14, where the polymerization is carried out at a temperature of from 80 to 140°C.

16. The process according to any of claims 11, 13, 14, and 15, wherein the swelling of the thermoplastic polyurethane is carried out in a solution of monomers polymerizable by a free-radical route, initiator, and also optionally auxiliaries and additional substances, below the polymerization temperature, and the polymerization temperature is markedly above the temperature at which the swelling procedure is carried out.

17. The process according to claim 16, where the polymerization takes place at from 110 to 140°C and the swelling takes place at from 10 to 60°C.

18. The process according to any of claims 11, 13, and 14, wherein the aqueous phase comprises a Pickering stabilizer in combination with a surfactant and/or a protective colloid.

19. A molding obtainable via injection molding of a polymer composition according to any of claims 1 to 10.

20. The use of an injection molding according to claim 19 as cable insulation, drag cable, pneumatic hose, spiral hose, toothed belt, conveying hose, or hydraulic hose.

## Revendications

1. Composition polymère, en particulier pour des utilisations de moulage par injection, contenant au moins un polyuréthane thermoplastique (TPU) présentant une température de Vicat, mesurée selon la norme ISO 306/A50, inférieure à 80°C et 5 à 95% en poids d'au moins un polymère pouvant être obtenu par polymérisation par voie radicalaire, par rapport à la somme du TPU et du polymère pouvant être obtenu par polymérisation par voie radicalaire, le polymère pouvant être obtenu par polymérisation par voie radicalaire étant lié au TPU sous forme de polymère en peigne, de polymère greffé ou de copolymère et le TPU contenant des groupes fonctionnels qui, dans les conditions caractéristiques d'une polymérisation par voie radicalaire, forment un polymère en peigne, un polymère greffé ou un copolymère avec les monomères polymérisables par voie radicalaire du polymère pouvant être obtenu par polymérisation par voie radicalaire,
des particules polymères expansées, contenant au moins un polyuréthane thermoplastique (TPU) présentant une température de Vicat (selon la norme ISO 306/ASO) inférieure à 80°C et 5 à 95% en poids d'au moins un polymère pouvant être obtenu par polymérisation par voie radicalaire, par rapport à la somme du TPU et du polymère pouvant être obtenu par polymérisation radicalaire, le polymère de styrène étant lié au TPU sous forme de polymère en peigne, de polymère greffé ou de copolymères au TPU, étant exclues.

2. Composition polymère selon la revendication 1 pour des utilisations de moulage par injection.

3. Composition polymère selon la revendication 1 ou 2, le polymère pouvant être obtenu par polymérisation par voie radicalaire étant un polymère du styrène.

4. Composition polymère selon au moins l'une quelconque des revendications 1 à 3, le polymère du styrène étant le polystyrène.

5. Composition polymère selon l'une quelconque des revendications 1 à 4, la température du Vicat du TPU utilisé étant située dans la plage de 60 à 75°C.

6. Composition polymère selon l'une quelconque des revendications 1 à 5 présentant une dureté Shore du TPU dans la plage de 50 à 100, mesurée selon la norme DIN 53505.

7. Composition polymère selon l'une quelconque des revendications 1 à 6, le TPU présentant une température de transition vitreuse dans la plage de -20 à -60°C, mesurée selon la norme ISO 11357/-1/-2.

8. Composition polymère selon l'une quelconque des revendications 1 à 7, le composant de type diisocyanate dans le TPU étant choisi parmi le diisocyanate de 4,4'-diphénylméthane, le diisocyanate de 2,4'-diphénylméthane et le diisocyanate de 2,2'-diphénylméthane.

9. Composition polymère selon l'une quelconque des revendications 1 à 8, le TPU pouvant être obtenu à partir de diisocyanate de 4,4'-diphénylméthane, de polytétrahydrofurannes et de 1,4-butanediol.

10. Composition polymère selon la revendication 9, les polytétrahydrofurannes étant le polytétrahydrofuranne 1000 et le polytétrahydrofuranne 2000.

11. Procédé pour la préparation d'une composition polymère, en particulier pour des utilisations de moulage par injection, selon l'une quelconque des revendications 1 à 10, comprenant les étampes :
a) dispersion d'un ou de plusieurs TPU présentant une température de Vicat inférieure à 80°C, de 5 à 95% en poids d'un ou de plusieurs monomères polymérisables par voie radicalaire, par rapport à la somme du TPU et des monomères mentionnés, d'un initiateur de polymérisation, d'un dispersant et le cas échéant d'autres additifs et/ou adjuvants de polymérisation dans un milieu aqueux à une température à laquelle il ne se produit substantiellement pas de polymérisation des monomères, le TPU contenant des groupes fonctionnels qui, dans les conditions caractéristiques d'une polymérisation par voie radicalaire, forment un polymère en peigne, un polymère greffé ou un copolymère avec les monomères polymérisables par voie radicalaire,
b) le cas échéant agitation de la dispersion obtenue pendant une durée de jusqu'à 24 h à une température à laquelle il ne se produit substantiellement pas de polymérisation des monomères,
c) polymérisation de monomères sous forme d'un polymère en peigne, d'un polymère greffé ou d'un copolymère sur le TPU.

12. Procédé pour la préparation d'une composition polymère, en particulier pour des utilisations de moulage par injection, selon l'une quelconque des revendications 1 à 11, comprenant les étampes :
a) dissolution d'un ou de plusieurs TPU présentant une température de Vicat inférieure à 80°C et le cas échéant d'autres additifs et/ou adjuvants de polymérisation dans un solvant, le TPU présentant des groupes fonctionnels qui, dans les conditions caractéristiques d'une polymérisation par voie radicalaire, forment un polymère en peigne, un polymère greffé ou un copolymère avec les monomères introduits dans l'étape c),
b) chauffage de la solution à une température à laquelle a lieu la polymérisation des monomères introduits dans l'étape c),
c) introduction de 5 à 95% en poids d'un ou de plusieurs monomères polymérisables par voie radicalaire (par rapport à la somme du TPU et du ou des monomères polymérisables par voie radicalaire) et d'un ou de plusieurs initiateurs de polymérisation.

13. Procédé selon la revendication 11 ou 12, **caractérisé en ce que** la polymérisation est effectuée en présence d'un agent ignifuge bromé organique et/ou contenant du phosphore et/ou de peroxydes organiques.

14. Procédé selon l'une quelconque des revendications 11 à 13, **caractérisé en ce que** la polymérisation est réalisée en présence d'un agent de réticulation.

15. Procédé selon l'une quelconque des revendications 11 à 14, la polymérisation étant réalisée à une température de 80 à 140°C.

16. Procédé selon l'une quelconque des revendications 11, 13, 14 ou 15, **caractérisé en ce que** le polyuréthane thermoplastique est soumis, en-dessous de la température de polymérisation, à un gonflement dans une solution constituée par les monomères polymérisables par voie radicalaire, l'initiateur et le cas échéant les adjuvants et les additifs et la température de polymérisation se situe nettement au-dessus de la température à laquelle est réalisé le processus de gonflement.

17. Procédé selon la revendication 16, la polymérisation ayant lieu entre 110 et 140°C et le gonflement entre 10 et 60°C.

18. Procédé selon l'une quelconque des revendications 11, 13 ou 14, **caractérisé en ce que** la phase aqueuse contient un stabilisant de Pickering en combinaison avec un tensioactif et/ou un colloïde de protection.

19. Pièce moulée, pouvant être obtenue par moulage par injection d'une composition polymère selon l'une quelconque des revendications 1 à 10.

20. Utilisation d'une pièce moulée par injection selon la revendication 19 comme isolation de câble, cordage de traction, tuyau pneumatique, tuyau en spirale, courroie dentée, tuyau de transvasement ou tuyau hydraulique.
